# EUROPÄISCHE PATENTANMELDUNG

(11) **EP 2 051 364 A2**
(43) Veröffentlichungstag der Anmeldung: **22.04.2009**
(21) Anmeldenummer: 08018024.3
(22) Anmeldetag: 15.10.2008
(51) Int. Cl.: H02M 7/537, H02J 3/38

(54) **Verfahren zum Betreiben eines Wechselrichters**

(30) Priorität: 19.10.2007 DE 102007050450; 05.12.2007 DE 102007058633
(71) Anmelder: Diehl AKO Stiftung & Co. KG, 88239 Wangen (DE)
(72) Erfinder: Schill, Christoph, 88213 Ravensburg (DE)
(74) Vertreter: Diehl Patentabteilung

(57) **Zusammenfassung**

In einem Verfahren zum Betreiben eines Wechselrichters zum Umwandeln von Gleichspannung in Wechselspannung mit zwei Gleichspannungsanschlüssen (1a,1b) und zwei Wechselspannungsanschlüssen (13a,13b), zwischen denen mehrere Leistungsschaltelemente (3 bis 6), die hochfrequent getaktet werden, geschaltet sind, wird die hochfrequente Taktung der Leistungsschaltelemente (3 bis 6) des Wechselrichters um einen Nulldurchgang der Wechselspannung herum für eine Zeitdauer abgeschaltet, die von der an den Gleichspannungsanschlüssen (1a,1b) des Wechselrichters anliegenden Gleichspannung und/oder der Ausgangsleistung des Wechselrichters abhängt, sodass in Zeitabschnitten mit einem schlechten Wirkungsgrad an den Wechselspannungsanschlüssen des Wechselrichters kein Strom erzeugt wird.

## Beschreibung

Die vorliegende Erfindung betrifft ein Verfahren zum Betreiben eines Wechselrichters nach dem Oberbegriff des Anspruchs 1.

Wechselrichter werden zum Beispiel zur elektrischen Energieeinspeisung in das öffentliche Stromnetz eingesetzt, wenn lediglich Gleichspannungsenergiequellen wie Photovoltaikanlagen, Brennstoffzellen oder Batterien zur Verfügung stehen. Alle Wechselrichter, egal welcher Bauart, nehmen regelmäßig mehr Energie auf als sie abgeben. Es ist daher ein Ziel vieler Weiterentwicklungen von Wechselrichtern, ihren Wirkungsgrad zu verbessern.

Die EP 0 284 021 B1 beschreibt Taktmuster zur Erzeugung von sinusförmiger Spannung und sinusförmigem Strom für transformatorlose Wechselrichter. Der Wirkungsgrad von Wechselrichtern dieser Art ist je nach der Auslegung ihrer Komponenten in einem bestimmten Lastbereich am besten. Unterhalb und oberhalb dieses Lastbereichs fällt der Wirkungsgrad deutlich ab.

Die DE 102 21 592 A1 offenbart einen Wechselrichter, bei dem am Ausgang einer Wechselrichterbrücke zwei zusätzliche Schalter mit jeweils einer in Reihe geschalteten Diode eingesetzt sind. Bei zeitrichtigem Öffnen und Schließen dieser Schalter wird ein Rückspeisen von Energie aus den Drosseln in den Pufferkondensator während der Kommutierung der Leistungsschaltelemente vermieden. Der Rippel des Stroms in den Drosseln und damit deren Verluste werden kleiner. Dieser Schaltungsaufbau erfordert jedoch einen hohen Bauteileaufwand und verbessert kaum den Wirkungsgrad für die Einspeisung geringer Energie in das Netz.

Ziel der EP 1 626 494 A2 ist ebenfalls die Vermeidung der Rückspeisung von Energie in den Pufferkondensator während der Kommutierung der Leistungsschaltelemente des Wechselrichters. Dies wird durch einen zusätzlichen Schalter zwischen dem Pufferkondensator und der Wechselrichterbrücke erreicht, der die Leitung zum Pufferkondensator während der Kommutierung unterbricht. In der übrigen Zeit muss dieser zusätzliche Schalter Strom allerdings führen und verursacht dadurch selbst wieder einen Leistungsverlust. Außerdem verbessert sich bei einer kleinen in das Netz eingespeisten Energie der Wirkungsgrad des Wechselrichters kaum.

Photovoltaikanlagen liefern entsprechend der schwankenden Sonneneinstrahlung durch Wolkenabdeckungen der Sonne und tageszeitlichen Verlauf schwankende Leistung an das Netz. Ein Wechselrichter einer Photovoltaikanlage wird daher sowohl im Bereich guter Effizienz bei hoher Leistungsabgabe als auch über lange Zeiten im Bereich schlechter Effizienz bei kleiner Leistungsabgabe betrieben. Es besteht daher Bedarf an einem Wechselrichter, der auch bei kleiner Leistungsabgabe effektiv betrieben werden kann.

Die vorliegende Erfindung hat daher die Aufgabe, ein Verfahren zum Betreiben eines Wechselrichters vorzusehen, mit dem der Wechselrichter auch im Bereich kleiner Leistungsabgabe effektiv betrieben wird.

Diese Aufgabe wird gelöst durch ein Verfahren zum Betreiben eines Wechselrichters mit den Merkmalen des Anspruchs 1. Vorteilhafte Ausgestaltungen und Weiterbildungen der Erfindung sind Gegenstand der abhängigen Ansprüche.

Das Verfahren zum Betreiben eines Wechselrichters zum Umwandeln von Gleichspannung in Wechselspannung mit zwei Gleichspannungsanschlüssen und zwei Wechselspannungsanschlüssen, zwischen denen mehrere Leistungsschaltelemente geschaltet sind, die hochfrequent getaktet werden, ist dadurch gekennzeichnet, dass die hochfrequente Taktung der Leistungsschaltelemente des Wechselrichters um einen Nulldurchgang der Wechselspannung herum für eine Zeitdauer abgeschaltet wird, die von der an den Gleichspannungsanschlüssen des Wechselrichters anliegenden Gleichspannung und/oder der Ausgangsleistung des Wechselrichters abhängt.

Durch das Abschalten der hochfrequenten Taktung der Leistungsschaltelemente des Wechselrichters um einen Nulldurchgang der Wechselspannung herum für eine Zeitdauer, die von der an den Gleichspannungsanschlüssen des Wechselrichters anliegenden Gleichspannung und/oder der Ausgangsleistung des Wechselrichters abhängt, wird der Betriebsbereich des Wechselrichters mit kleinem Wirkungsgrad ausgeblendet und der Wechselrichter hauptsächlich im Betriebsbereich mit gutem Wirkungsgrad betrieben.

Die Erfindung geht dabei von den folgenden Überlegungen aus. Während einer hochfrequenten Taktung der Leistungsschaltelemente fließt in herkömmlichen Wechselrichtern üblicherweise ein Blindstrom, der in entsprechenden Schaltungskomponenten einen Leistungsverbrauch verursacht. Die an den Wechselspannungsanschlüssen anliegende bzw. in ein Netz eingespeiste Leistung ist dem Strom proportional. Bei einem kleinen Strom in der Nähe der Nulldurchgänge ist die übertragene Leistung im Verhältnis zu dem oben genannten Leistungsverbrauch durch die hochfrequente Taktung klein, sodass in diesem Betriebsbereich ein schlechter Wirkungsgrad vorliegt. Mit steigendem Strom wird dieser Wirkungsgrad entsprechend besser. Das erfindungsgemäße Verfahren blendet diese Bereiche mit schlechtem Wirkungsgrad aus und die Leistung wird hauptsächlich im Bereich mit gutem Wirkungsgrad übertragen, sodass auch der insgesamt erzielte Wirkungsgrad des Wechselrichters verbessert ist.

In einer Ausgestaltung der Erfindung wird im Teillastbereich des Wechselrichters die Zeitdauer, während der die hochfrequente Taktung der Leistungsschaltelemente um einen Nulldurchgang der Wechselspannung herum abgeschaltet wird, umso länger gewählt je niedriger die Ausgangsleistung des Wechselrichters ist. Mit anderen Worten wird ein Bereich mit schlechtem Wirkungsgrad ausgeblendet, der umso größer ist je niedriger der vom Wechselrichter erzeugte Strom bzw. die Ausgangsleistung des Wechselrichters ist.

In einer weiteren Ausgestaltung der Erfindung werden im Teillastbereich des Wechselrichters die Leistungsschaltelemente so angesteuert, dass sich der an den Wechselspannungsanschlüssen erzeugte Strom mit der Steigung der Kurve der an den Wechselspannungsanschlüssen anliegenden Spannung ändert. Alternativ können die Leistungsschaltelemente auch so angesteuert werden, dass sich der an den Wechselspannungsanschlüssen erzeugte Strom mit der Steigung der Quadratkurve der an den Wechselspannungsanschlüssen anliegenden Spannung ändert.

In einer weiteren Ausgestaltung der Erfindung wird die hochfrequente Taktung der Leistungsschaltelemente des Wechselrichters um einen Nulldurchgang der Wechselspannung herum mit gleich langen Zeitabschnitten für steigende und fallende Flanken abgeschaltet. Alternativ kann die hochfrequente Taktung der Leistungsschaltelemente des Wechselrichters um einen Nulldurchgang der Wechselspannung herum auch mit unterschiedlich langen Zeitabschnitten für steigende und fallende Flanken abgeschaltet werden.

Im Spitzenlastbereich des Wechselrichters wird die Zeitdauer, während der die hochfrequente Taktung der Leistungsschaltelemente um einen Nulldurchgang der Wechselspannung herum abgeschaltet wird, vorzugsweise zu Null bzw. minimal gewählt.

Da je nach Dimensionierung der Schaltungskomponenten des Wechselrichters sein Wirkungsgrad ab einer bestimmten Ausgangsleistung wieder abfällt, werden im Spitzenlastbereich des Wechselrichters die Leistungsschaltelemente bevorzugt so angesteuert, dass der an den Wechselspannungsanschlüssen erzeugte Strom die Form einer abgeflachten Sinuskurve hat.

In einer weiteren Ausgestaltung der Erfindung wird die Frequenz der hochfrequenten Taktung der Leistungsschaltelemente des Wechselrichters an einen Effektivwert des an den Wechselspannungsanschlüssen erzeugten Stroms angepasst.

In einer noch weiteren Ausgestaltung der Erfindung werden die Leistungsschaltelemente des Wechselrichters so angesteuert, dass der an den Wechselspannungsanschlüssen erzeugte Strom eine Kurvenform mit wenig Oberwellen hat.

Das oben beschriebene Verfahren der Erfindung ist insbesondere bei der Verwendung für einen transformatorlosen Wechselrichter von Vorteil. Grundsätzlich ist das Verfahren aber auch bei Wechselrichtern mit Transformator einsetzbar; aufgrund der durch den Transformator bedingten Leistungsverluste ist es in diesem Fall aber nicht so effektiv wie bei einem transformatorlosen Wechselrichter.

Das oben beschriebene Verfahren der Erfindung ist ferner bei der Verwendung für einen Wechselrichter zum Einspeisen von Strom in ein Wechselspannungsnetz von Vorteil. Das Verfahren kann aber gleichermaßen auch bei einem Wechselrichter zur direkten Stromversorgung von Verbrauchern eingesetzt werden.

Das oben beschriebene Verfahren der Erfindung wird vorzugsweise für einen Wechselrichter verwendet, an dessen Gleichspannungsanschlüssen eine Photovoltaikgleichspannungsquelle, eine Brennstoffzelle, eine Batterie oder dergleichen angeschlossen ist.

Das oben beschriebene Verfahren der Erfindung ist grundsätzlich für alle Arten von Wechselrichtern in vorteilhafter Weise verwendbar; insbesondere auch für Wechselrichter, bei denen die Leistungsschaltelemente Halb- oder Vollbrücken, Sperrwandler, Hochsetzsteller, Tiefsetzsteller, Cuk-Wandler, Sepic-Wandler oder dergleichen enthalten.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Darstellung der Schaltungstopologie eines einphasigen, transformatorlosen Wechselrichters in Brückenschaltung, bei dem das Verfahren der Erfindung anwendbar ist;
- Fig. 2: Diagramme der zeitlichen Verläufe von Wechselspannung und Wechsel- strom im Idealfall;
- Fig. 3: ein Diagramm der zeitlichen Verläufe von Wechselströmen für drei unter- schiedliche Ausgangsleistungen des Wechselrichters gemäß einem ersten Ausführungsbeispiel der Erfindung;
- Fig. 4: ein Diagramm der zeitlichen Verläufe von Wechselströmen für drei unter- schiedliche Ausgangsleistungen des Wechselrichters gemäß einem zweiten Ausführungsbeispiel der Erfindung; und
- Fig. 5: ein Diagramm des zeitlichen Verlaufs eines Wechselstroms für den Fall des Spitzenlastbereichs des Wechselrichters gemäß einem weiteren Ausführungsbeispiel der Erfindung.

Nachfolgend wird die Erfindung am Beispiel eines einphasigen, transformatorlosen Wechselrichters zum Umformen elektrischer Gleichspannung einer Gleichspannungsquelle in Wechselspannung zur Einspeisung von Energie in ein Wechselspannungsnetz gleicher Phase und ohne Phasenverschiebung zwischen Spannung und Strom erläutert.

Die vorliegende Erfindung ist allerdings nicht nur auf diesen Anwendungsfall beschränkt. Das erfindungsgemäße Verfahren ist in gleicher Weise sowohl bei einphasigen und mehrphasigen, bei transformatorlosen Wechselrichtern und Wechselrichtern mit Transformator, zur Einspeisung in Netze mit 50 Hz, 60 Hz oder 400 Hz geeignet. Auch muss der Wechselrichter nicht unbedingt zur Einspeisung von Energie in ein Wechselspannungsnetz verwendet werden, das erfindungsgemäße Verfahren ist in vorteilhafter Weise auch für Wechselrichter einsetzbar, die Bestandteil einer Wechselstromquelle zur direkten Versorgung von Verbrauchern sind.

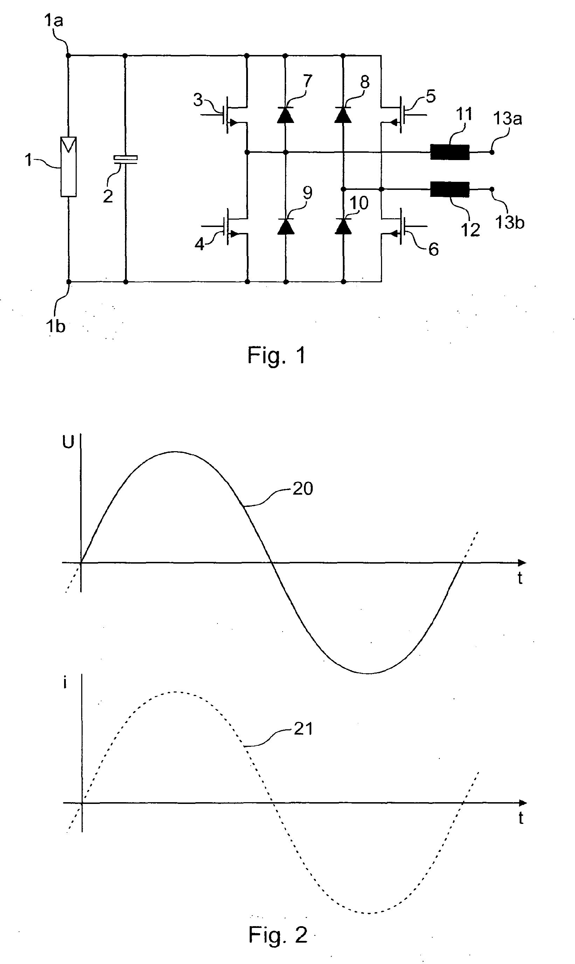

Fig. 1 zeigt eine bekannte Schaltungstopologie eines einphasigen, transformatorlosen Wechselrichters in Brückenschaltung. An zwei Gleichspannungsanschlüssen 1a und 1b des Wechselrichters ist eine Gleichspannungsquelle 1 wie beispielsweise eine Photovoltaikgleichspannungsquelle, eine Brennstoffzelle, eine Batterie oder dergleichen angeschlossen. Der Wechselrichter wandelt die an den Gleichspannungsanschlüssen 1 a, 1b anliegende Gleichspannung in eine Wechselspannung um und speist elektrische Energie über zwei Wechselspannungsanschlüsse 13a und 13b in ein Wechselstromnetz mit zum Beispiel 50 Hz, 60 Hz oder 400 Hz gleicher Phase und einem Strom ohne Phasenverschiebung ein.

Der Wechselrichter enthält einen parallel zur Gleichspannungsquelle 1 geschalteten Pufferkondensator 2 und eine Brückenschaltung bestehend aus vier Leistungsschaltelementen 3 bis 6. Die Leistungsschaltelemente 3 bis 6 sind als Hochfrequenzschalter ausgebildet, die für Schaltvorgänge bis zu einigen 100 kHz geeignet sind. Parallel zu den Leistungsschaltelementen 3 bis 6 ist jeweils eine Freilaufdiode 7 bis 10 geschaltet, die den Strom während der Kommutierungsphasen der Leistungsschaltelemente 3 bis 6 übernehmen. Den Wechselspannungsanschlüssen 13a, 13b ist jeweils eine Drossel 11 bzw. 12 zugeordnet. Die Drosseln 11, 12 sorgen an den Wechselspannungsanschlüssen 13a, 13b für einen sinusförmigen Strom mit geringem Rippel. Zur besseren Übersichtlichkeit sind in Fig. 1 weitere Bauelemente wie zum Beispiel Filter zur Verbesserung der elektromagnetischen Verträglichkeit weggelassen.

Zur Umwandlung der an den Gleichspannungsanschlüssen 1 a, 1b anliegenden Gleichspannung in einen über die Wechselspannungsanschlüsse 13a, 13b in ein Netz einzuspeisenden Wechselstrom werden die Leistungsschaltelemente 3 bis 6 mit bestimmten hochfrequenten Taktmustern in aufeinander abgestimmter Weise geöffnet und geschlossen. Dadurch werden zeitdiskret voneinander unterscheidbare Spannungsimpulse erzeugt, deren Potentiallage auf die Netzspannung abgestimmt ist. Zum Beispiel werden während einer positiven Halbwelle die beiden Leistungsschaltelemente 3 und 6 mit hochfrequentem Takt und unterschiedlicher Impulsbreite angesteuert und während einer negativen Halbwelle die Leistungsschaltelemente 4 und 5. Für die Erzeugung, die Steuerung und die Regelung des zeitlichen Verlaufs der hochfrequenten Taktung der Leistungsschaltelemente 3 bis 6 können sowohl Hardwareschaltungen als auch Softwarelösungen mit digitalen Signalprozessoren verwendet werden.

Das erfindungsgemäße Verfahren zum Betreiben eines solchen Wechselrichters (als ein Beispiel für einen Wechselrichter) wird nun anhand verschiedener Ausführungsbeispiele unter Bezug auf Fig. 2 bis 5 im Detail beschrieben.

In Fig. 2 ist dargestellt, dass der an den Wechselspannungsanschlüssen 13a, 13b des Wechselrichters erzeugte Strom i (Kurve 21) und die dort anliegende Spannung U (Kurve 20) im Idealfall nahezu sinusförmig und in Phase zueinander sind. Falls der Wechselrichter zur Einspeisung elektrischer Energie in ein Wechselstromnetz angeschlossen ist, entspricht die an den Wechselspannungsanschlüssen 13a, 13b anliegende Spannung U der Netzspannung.

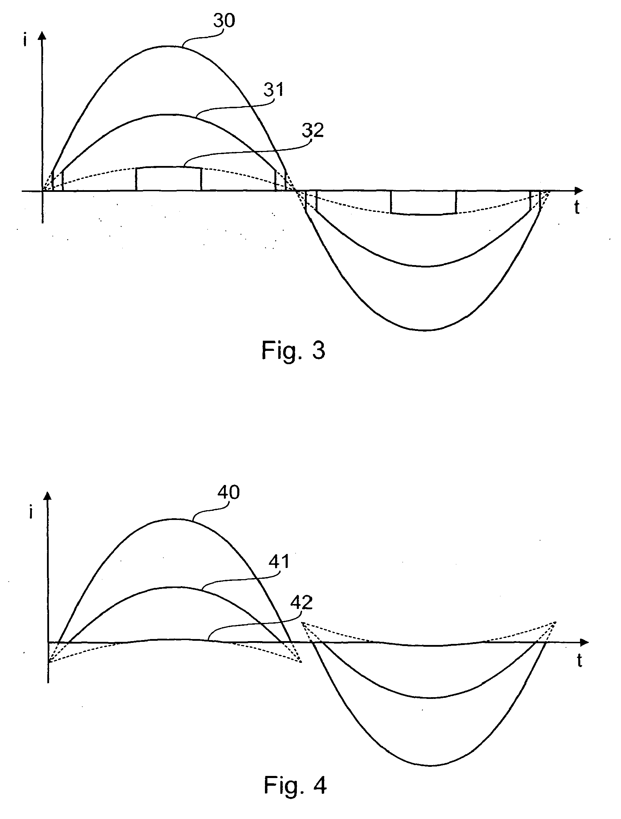

Fig. 3 zeigt den Stromverlauf am Ausgang des Wechselrichters nach dem Verfahren der Erfindung für drei unterschiedliche Ausgangsleistungen im Teillastbereich. Bei einer sehr kleinen in das Netz eingespeisten Leistung fließt der Strom i nur im Bereich der maximalen Sinusspannung des Netzes (Kurve 32). Vor und nach den Nulldurchgängen der Netzspannung ist die hochfrequente Taktung für die vier Leistungsschaltelemente 3 bis 6 abgeschaltet bzw. unterdrückt. Damit sind die Drosseln 11, 12 der Wechselspannungsausgänge 13a, 13b von der Gleichspannungsquelle 1 und dem Pufferkondensator 2 abgekoppelt. Weder durch die Drosseln 11, 12 noch durch die Leistungsschaltelemente 3 bis 6 fließt Strom, d.h. der Leistungsteil des Wechselrichters verbraucht in diesem Betriebsbereich, in dem der Wechselrichter eigentlich einen geringen Wirkungsgrad besitzt, wie oben beschrieben, keine Leistung. Mit dem Zuschalten der Taktung im Bereich der maximalen Sinusspannung fließt der Strom dann mit einem annehmbaren Wirkungsgrad des Wechselrichters.

Bei einer mittleren, von der Gleichspannungsquelle 1 ins Netz gespeisten Leistung fließt der Strom i mit einem guten Wirkungsgrad über einen wesentlich größeren Zeitraum (Kurve 31). Im Fall der Stromkurve 30 für eine noch höhere Ausgangsleistung des Wechselrichters sind die Leistungsschaltelemente 3 bis 6 nur noch eine kurze Zeit um den Nulldurchgang der Netzspannung herum unterbrochen.

Die ins Netz eingespeiste bzw. an den Wechselspannungsanschlüssen 13a, 13b erzeugte Leistung ist dem eingespeisten bzw. erzeugten Strom i proportional. Bei kleinem Strom in der Nähe der Nulldurchgänge der Sinuswelle ist der momentane Wirkungsgrad des Wechselrichters schlecht, da die übertragene Leistung im Verhältnis zu den Verlusten durch die hochfrequente Taktung in den Leistungsschaltelementen 3 bis 6 und den Drosseln 11, 12 klein ist. Dies gilt insbesondere im Teillastbereich des Wechselrichters. Erfindungsgemäß wird daher die hochfrequente Taktung des Wechselrichters mit ihren Verlusten um die Nulldurchgänge der Wechselspannung U herum als Funktion des Stroms bzw. der Ausgangsleistung des Wechselrichters kürzer oder länger abgeschaltet oder unterdrückt, sodass der Bereich des schlechten Wirkungsgrades ausgeblendet wird.

Der an den Wechselspannungsanschlüssen 13a, 13b erzeugte Strom i ist daher nicht mehr sinusförmig, wie in Fig. 3 dargestellt. Die Netzhalbwelle in der Mitte einer Netzhalbwelle ist allerdings entsprechend größer, um die gleiche Gesamtleistung zu übertragen. Aufgrund des besseren Wirkungsgrades des Wechselrichters in diesem Bereich wird so eine insgesamt höhere Ausgangsleistung des Wechselrichters erzielt.

Das in Fig. 3 veranschaulichte Verfahren zum Betreiben eines Wechselrichters bewirkt auch im Teillastbereich einen guten Wirkungsgrad. Durch das harte An- und Abfahren des Stroms i gemäß den Kurven 30 bis 32 während der Netzhalbwellen entstehen jedoch Oberwellen, die unerwünscht sind.

Fig. 4 zeigt daher ein weiteres Ausführungsbeispiel eines Verfahrens zum Betreiben eines Wechselrichters. Das Verfahren arbeitet nach dem gleichen Grundprinzip wie das oben beschriebene Verfahren. D.h. die hochfrequente Taktung des Wechselrichters wird um die Nulldurchgänge der Wechselspannung herum als Funktion des Stroms bzw. der Ausgangsleistung des Wechselrichters kürzer oder länger abgeschaltet oder unterdrückt, um den Bereich des schlechten Wirkungsgrades auszublenden.

Im Unterschied zum ersten Ausführungsbeispiel folgen aber die Stromkurven 40, 41, 42 im Bereich des An_ und Abfahrens der Steigung der Wechselspannung. Diese Stromform ist schaltungstechnisch einfach zu realisieren und arbeitet in Bezug auf die Erzeugung von Oberwellen wesentlich günstiger. Wahlweise können die Leistungsschaltelemente 3 bis 6 auch so angesteuert werden, dass sich der an den Wechselspannungsanschlüssen 13a, 13b erzeugte Strom mit der Steigung der Quadratkurve der an den Wechselspannungsanschlüssen anliegenden Spannung ändert.

Die beiden anhand der Fig. 3 und 4 erläuterten Ausführungsbeispiele betreffen jeweils das Betreiben eines Wechselrichters in seinem Teillastbereich. Je nach Dimensionierung der Leistungsschaltelemente 3 bis 6 und der Drosseln 11, 12 fällt der Wirkungsgrad des Wechselrichters ab einer bestimmten übertragenen Leistung aber wieder ab.

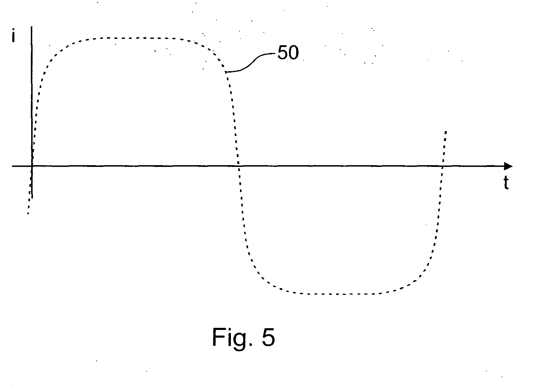

Um auch bei einer Spitzenlast des Wechselrichters einen guten Wirkungsgrad zu erzielen, wird eine in Fig. 5 veranschaulichte Stromkurvenform 50 vorgeschlagen. Durch den nach dem Nulldurchgang der Wechselspannung rasch ansteigenden Strom i werden im Spitzenlastbereich schnell gute momentane Werte für den Wirkungsgrad des Wechselrichters erreicht. Daher wird im Spitzenlastbereich des Wechselrichters die Zeitdauer, während der die hochfrequente Taktung der Leistungsschaltelemente 3 bis 6 um einen Nulldurchgang der Wechselspannung herum abgeschaltet wird, vorzugsweise minimal oder zu Null gewählt wird.

Im übrigen Bereich bleibt der Spitzenwert des Stroms i unterhalb der Sinuskurve für die gleiche übertragene Leistung. Mit anderen Worten wird im Spitzenlastbereich des Wechselrichters die hochfrequente Taktung der Leistungsschaltelemente 3 bis 6 so gesteuert, dass man eine Stromkurve 50 in Form einer abgeflachten Sinuskurve erhält. Auf diese Weise wird auch der momentane Wirkungsgrad während der Spitzenwerte der Wechselspannung verbessert.

Das oben beschriebene Verfahren zum Betreiben eines Wechselrichters ist in besonders vorteilhafter Weise bei einem Wechselrichter zum Einspeisen einer von einer Photovoltaikgleichspannungsquelle erzeugten Energie in ein Wechselstromnetz anwendbar, ohne dass die vorliegende Erfindung auf diesen speziellen Anwendungsfall beschränkt sein soll.

## Patentansprüche

1. Verfahren zum Betreiben eines Wechselrichters zum Umwandeln von Gleichspannung in Wechselspannung mit zwei Gleichspannungsanschlüssen (1a, 1 b) und zwei Wechselspannungsanschlüssen (13a, 13b), zwischen denen mehrere Leistungsschaltelemente (3 bis 6), die hochfrequent getaktet werden, geschaltet sind,
**dadurch gekennzeichnet,**
**dass** die hochfrequente Taktung der Leistungsschaltelemente (3 bis 6) des Wechselrichters um einen Nulldurchgang der Wechselspannung herum für eine Zeitdauer abgeschaltet wird, die von der an den Gleichspannungsanschlüssen (1a, 1 b) des Wechselrichters anliegenden Gleichspannung und/oder der Ausgangsleistung des Wechselrichters abhängt.

2. Verfahren nach Anspruch 1,
**dadurch gekennzeichnet,**
**dass** im Teillastbereich des Wechselrichters die Zeitdauer, während der die hochfrequente Taktung der Leistungsschaltelemente (3 bis 6) um einen Nulldurchgang der Wechselspannung herum abgeschaltet wird, umso länger gewählt wird je niedriger die Ausgangsleistung des Wechselrichters ist.

3. Verfahren nach Anspruch 1 oder 2,
**dadurch gekennzeichnet,**
**dass** im Teillastbereich des Wechselrichters die Leistungsschaltelemente (3 bis 6) so angesteuert werden, dass sich der an den Wechselspannungsanschlüssen (13a, 13b) erzeugte Strom mit der Steigung der Kurve der an den Wechselspannungsanschlüssen anliegenden Spannung ändert.

4. Verfahren nach Anspruch 1 oder 2,
**dadurch gekennzeichnet,**
**dass** im Teillastbereich des Wechselrichters die Leistungsschaltelemente (3 bis 6) so angesteuert werden, dass sich der an den Wechselspannungsanschlüssen (13a, 13b) erzeugte Strom mit der Steigung der Quadratkurve der an den Wechselspannungsanschlüssen anliegenden Spannung ändert.

5. Verfahren nach einem der Ansprüche 1 bis 4,
**dadurch gekennzeichnet,**
**dass** die hochfrequente Taktung der Leistungsschaltelemente (3 bis 6) des Wechselrichters um einen Nulldurchgang der Wechselspannung herum mit gleich langen Zeitabschnitten für steigende und fallende Flanken abgeschaltet wird.

6. Verfahren nach einem der Ansprüche 1 bis 4,
**dadurch gekennzeichnet,**
**dass** die hochfrequente Taktung der Leistungsschaltelemente (3 bis 6) des Wechselrichters um einen Nulldurchgang der Wechselspannung herum mit unterschiedlich langen Zeitabschnitten für steigende und fallende Flanken abgeschaltet wird.

7. Verfahren nach einem der Ansprüche 1 bis 6,
**dadurch gekennzeichnet,**
**dass** im Spitzenlastbereich des Wechselrichters die Zeitdauer, während der die hochfrequente Taktung der Leistungsschaltelemente (3 bis 6) um einen Nulldurchgang der Wechselspannung herum abgeschaltet wird, minimal oder zu Null gewählt wird.

8. Verfahren nach einem der Ansprüche 1 bis 7,
**dadurch gekennzeichnet,**
**dass** im Spitzenlastbereich des Wechselrichters die Leistungsschaltelemente (3 bis 6) so angesteuert werden, dass der an den Wechselspannungsanschlüssen (13a, 13b) erzeugte Strom die Form einer abgeflachten Sinuskurve hat.

9. Verfahren nach einem der vorherigen Ansprüche,
**dadurch gekennzeichnet,**
**dass** die Frequenz der hochfrequenten Taktung der Leistungsschaltelemente (3 bis 6) des Wechselrichters an einen Effektivwert des an den Wechselspannungsanschlüssen (13a, 13b) erzeugten Stroms angepasst wird.

10. Verfahren nach einem der vorherigen Ansprüche,
**dadurch gekennzeichnet,**
**dass** die Leistungsschaltelemente (3 bis 6) des Wechselrichters so angesteuert werden, dass der an den Wechselspannungsanschlüssen (13a, 13b) erzeugte Strom eine Kurvenform mit wenig Oberwellen hat.

11. Verwendung des Verfahrens nach einem der Ansprüche 1 bis 10 für einen transformatorlosen Wechselrichter.

12. Verwendung des Verfahrens nach einem der Ansprüche 1 bis 10 für einen Wechselrichter zum Einspeisen von Strom in ein Wechselspannungsnetz.

13. Verwendung des Verfahrens nach einem der Ansprüche 1 bis 10 für einen Wechselrichter, an dessen Gleichspannungsanschlüssen eine Photovoltaikgleichspannungsquelle, eine Brennstoffzelle, eine Batterie oder dergleichen angeschlossen ist.

14. Verwendung des Verfahrens nach einem der Ansprüche 1 bis 10 für einen Wechselrichter, bei dem die Leistungsschaltelemente Halb- oder Vollbrücken, Sperrwandler, Hochsetzsteller, Tiefsetzsteller, Cuk-Wandler, Sepic-Wandler oder dergleichen enthalten.
